# EUROPEAN PATENT APPLICATION

(11) **EP 2 131 465 A1**
(43) Date of publication of application: **09.12.2009**
(21) Application number: 07730411.1
(22) Date of filing: 29.03.2007
(51) Int. Cl.: H02G 3/04

(54) **INSULATING TUBE FOR CABLES**

(71) Applicant: Relats, S.A., 08140 Caldes de Montbui (ES)
(72) Inventor: RELATS MANENT, Jordi, E-08140 Caldes de Montbui (ES); RELATS CASAS, Pere, E-08140 Caldes de Montbui (ES)
(74) Representative: Maldonado Jordan, Julia
(86) International application number: PCT/ES2007/000170
(87) International publication number: WO 2008/119842

(57) **Abstract**

The tube, preferably for protection of electric conductors and other components, is formed by a first inner braided layer (1) of 100% glass fibre thread or glass fibre mixture, an intermediate covering (2) of plastic resin, a second outer braided layer (3) of glass fibre and/or polyester thread and a finishing covering (4), of plastic, for binding the threads of the second outer layer (3). The plastic resin of the intermediate covering (2) is preferably silicone.

## Description

### Object of the Invention

This invention refers to an insulating tube for cables, of the type used for the protection of cables, electrical conductors and other components or similar elements.

### Background to the Invention

The use of protective and insulating tubes and sheathes is common in the industry to protect electrical cables and other components against possible interaction with external elements. Hence, the presence of protective tubes against abrasion is common to prevent them from the rubbing and knocking of said cables against rigid parts, cutting edges and other structural elements, where the external wear can cause a short circuit if the cable becomes bare. Likewise there are also electrical cable protective tubes and sheathes so as to give protection against external dampness, or the presence of another element subjected to a different tension bringing about a breakdown from the tension of the inner cables.

However, there are no tubes or sheathes that allow for total protection against the two problems, offering resistance against wear and rubbing as well as electrical insulation. Those tubes that offer good resistance to wear are poor insulators of tension, on normally being made from metallic materials. In turn, the tubes that offer optimum electrical insulation do not have a moderately suitable mechanical resistance, if these features are demanded.

As a solution to this problem some manufacturers offer conventional tubes and sheathes for voltage protection, to which an external mesh is added in a more or less manual manner. This embodiment results in a compound tube that does not have a simple structure and that can be difficult to handle in the installation, as there is the risk of some coming undone or moving inside the others.

### Description of the Invention

The insulating tube, object of this invention, has some technical peculiarities aimed at offering an integral solution to the need for protection in regard to wear and tear from rubbing and electrical insulation in regard to the environment.

In effect, the tube has a first inner braided layer of 100% glass fibre thread or a mixture of glass fibre that is a good electrical insulator. There is then an intermediary coating of plastic resin onto this first layer, and a second external braided layer of glass fibre and/or polyester thread, a mixture of both threads also being possible, the outside of the tube being finished off with a coating of a plastic finishing material for the fixing of the fibre threads of the second external braided layer.

The intermediary plastic resin coating is a silicone, applied in a liquid form and hardened in a kiln, in such a way that the first internal insulating layer is structurally reinforced, preventing it from fraying.

In a preferred embodiment, the second external layer is made from a 100% glass fibre thread, braided directly onto the intermediary coating in a braiding machine into which the tube is fed through a rear opening for the direct braiding of the second external layer.

In an alternative embodiment, the second external braided layer is made up of a 100% polyester thread.

### Description of the Figures

In order to complete the description that is being made and for the purpose of providing a better understanding of its characteristics, a set of drawings is attached to this present description in which the figures being by way of illustration and are not by way of limitation on the invention, in which the following is shown:

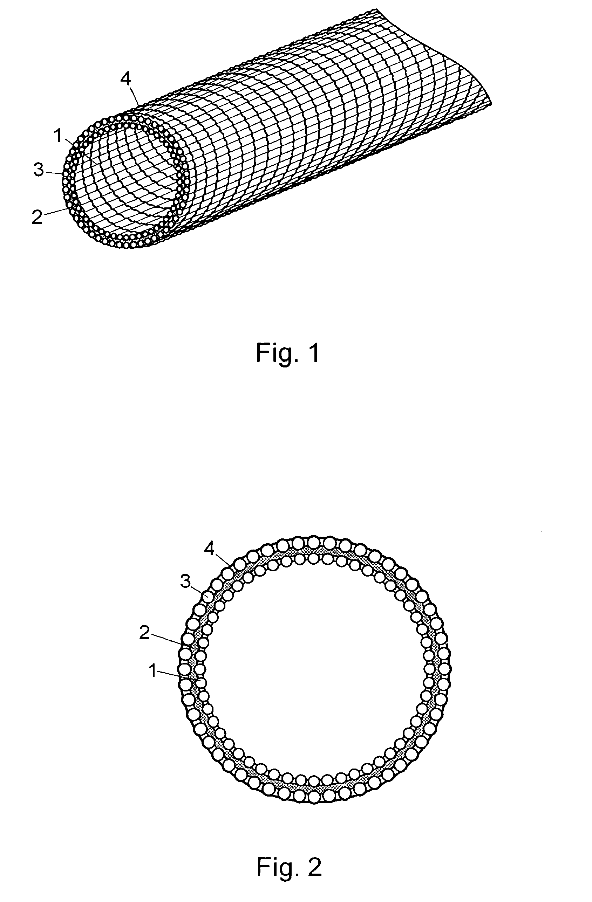

- Figure 1 shows a perspective view of a fragment of the tube.
- Figure 2 shows a diagrammatic representation of a transverse section of a tube.

### Preferred embodiment of the invention

As can be seen in the referenced figures the tube is made up of an inner braided first layer (1) of 100% glass fibre threads with an appreciably cylindrical shape and the outside has an intermediary coating of silicone (3) that fixes the fibres of said first inner layer (1). There is a second external braided layer (3) of 100% polyester fibre threads onto the intermediary coating (2). There is a coating of a plastic finishing material (4) to fix the fibre threads which is applied to the second external braided layer (3) to prevent fraying.

Once having sufficiently described the nature of the invention, likewise having given a preferred embodiment it is placed on record that the materials, shape, size and arrangement of the elements described can be modified provided that they do not mean an alteration of the basic essentials of the invention that are claimed below.

## Claims

1. An insulating tube for cables, of the type of those used the for protection of electric conductors and other components, formed by threads of differing materials; **characterised in that** it has a first inner braided layer (1) of 100% glass fibre thread or glass fibre mixture, an intermediate covering (2) of plastic resin, a second outer braided layer (3) of glass fibre and/or polyester thread and a finishing covering (4), of plastic, for binding the threads of the second outer layer (3).

2. A tube according to Claim 1, **characterised in that** the intermediary plastic resin of the coating (2) is silicone.

3. A tube according to Claim 1, **characterised in that** the second outer layer (3) is made from 100% glass fibre threads.

4. A tube according to Claim 1, **characterised in that** the second outer layer (3) is made from 100% polyester threads.
